(19) Europäisches Patentamt
European Patent Office
Office européen des brevets

(11) EP 0 449 616 B1

(12) **EUROPEAN PATENT SPECIFICATION**

(45) Date of publication and mention of the grant of the patent:
**17.09.1997 Bulletin 1997/38**

(51) Int Cl.[6]: **C08G 18/46**, C08G 18/50, C08G 18/40, C08G 18/10, C08G 18/32

(21) Application number: **91302701.7**

(22) Date of filing: **27.03.1991**

(54) **Use of two part polyurethaneurea adhesive compositions**

Verwendung von Polyurethanharnstoff-Zusammensetzungen als Zweikomponenten-Klebstoff

Utilisation de compositions de polyuréthanne-urée comme adhèsif a deux composants.

(84) Designated Contracting States:
**CH DE ES FR GB IT LI NL SE**

(30) Priority: **30.03.1990 US 502333**

(43) Date of publication of application:
**02.10.1991 Bulletin 1991/40**

(73) Proprietor: **MINNESOTA MINING AND MANUFACTURING COMPANY**
**St. Paul, Minnesota 55133-3427 (US)**

(72) Inventors:
- **Reid, Thomas S, Minnesota Mining & Manuf.Co.**
  **St. Paul, Minnesota 55133-3427 (US)**
- **Wright, Charles D.**
  **Minnesota Mining & Manuf.Co.**
  **St.Paul, Minnesota 55133-3427 (US)**

(74) Representative: **Baillie, Iain Cameron et al**
**c/o Ladas & Parry**
**52-54 High Holborn**
**London WC1V 6RR (GB)**

(56) References cited:

| | |
|---|---|
| **EP-A- 0 103 453** | **EP-A- 0 225 640** |
| **EP-A- 0 370 286** | **AT-B- 0 373 609** |
| **US-A- 3 817 940** | **US-A- 4 328 322** |
| **US-A- 4 504 648** | **US-A- 4 642 320** |
| **US-A- 4 732 959** | |

EP 0 449 616 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Technical Field

The invention described herein relates to the use of a two-part polyurethaneurea adhesive composition displaying excellent adhesion to elastomeric substrates.

### Background Art

Various adhesive products are commercially available for asserted use as sealants or adhesives to repair or patch polymeric elastomeric materials such as natural rubber, plasticized polyvinyl chloride, polychloroprene and the like. Such materials are typically used in a variety of outdoor recreation articles, such as tents, rubber boots, waders, inflatable objects (e.g., rafts, inner tubes), etc. These articles are used in a variety of environmental conditions, including high humidity and rain, and are often subject to abrasion or other potentially deleterious conditions.

Many of the commercially available adhesive compositions for use with such materials are high-solvent content polyurethanes, polyvinyl chloride, or rubber blends. Such adhesives are, however, not individually suitable for use with a wide variety of polymeric substrates. Some, for example, have extended cure times which means a repaired item may not be available for use for many hours or even days. When exposed to environmental extremes or high moisture conditions, some form only weak adhesive bonds to certain substrates and others fail to form any bond at all. Additionally, some of these products contain solvents which can cause detrimental foaming or bubbling while curing, and which present certain health and environmental hazards. When the product is a two-part adhesive system, formation of useful bonds may require close measurement, which may be problematic for the user under various environmental and field conditions. Further, some, like conventional rubber cement, may require a separate patch to be useful. For good bonding to rubber, vulcanization is typically required to achieve a satisfactory bond.

It is therefore desirable to provide an adhesive composition capable of curing at ambient temperatures; eliminating the necessity for solvents and the problems associated therewith; and forming useful bonds in about one hour and strong bonds in 24 hours or less.

In addition, when a preferred excess of NCO stoichiometry is utilized, the composition is capable of adhering strongly to a variety of polymeric/elastomeric substrates, even in the presence of moisture and environmental extremes; forming useful bonds despite inaccurate component measurements, if required; curing in contact with, or even submerged in, water; and forming a high strength flexible elastomer itself upon curing.

Polyurethanes have many practical applications as foams, elastomers, adhesives, coatings and sealants. Polyurethane adhesives typically involve the catalyzed reaction of hydroxyl-terminated oligomers (i.e., polyols) and di- or polyisocyanates. However, exposure of polyurethane adhesive compositions to water or moisture conditions often causes an unsatisfactory reduction in adhesive bond strength. Additionally, catalysts for the polyol/isocyanate reaction often also catalyze a water/isocyanate reaction, thus causing bubbling and foaming when used in wet or high humidity conditions or when applied to wet substrates.

Polyureas are obtained by the polyaddition of substantially equivalent amounts of polyisocyanates and polyamines (especially diamines) having terminal amino groups, typically resulting in rigid compositions upon curing. Such materials are typically used for injection molding of automotive parts, where fast cure and short cycle times are desired, and for molding rigid articles, such as skate wheels and ski boots. However, polyureas generally are not suitable for formulating room temperature curable liquid compositions.

Polyurethaneureas are formed by first preparing an isocyanate-terminated prepolymer from a macrodiol, such as a polyester diol or a polyetherdiol, using excess polyisocyanate, resulting in a prepolymer having isocyanate end groups. This prepolymer is in turn reacted with polyamines to yield polyurethaneureas. Such materials are characterized by alternating mobile soft segments, which provide flexibility, and hard segments, which contribute to cohesive strength and sometimes to adhesive strength.

U.S. Patent No. 4,663,201 discloses a method of coating an object with a polyurea resulting from the reaction of a polyisocyanate having at least three isocyanate moieties with from about 0.8 to 1.2 equivalents of a sterically hindered secondary aromatic diamine.

U.S. Patent No. 3,817,940 discloses a synthetic polymer produced by the polyaddition reaction of about 0.9 to about 1.2 equivalents of polyisocyanate per equivalent of an ortho-substituted aminobenzoic acid ester or amide, i.e., a diamine. Such diamines are solid at room temperature, and thus would be very difficult to use in field conditions.

U.S. 4,345,058 discloses a urethane prepolymer repair system provided by an isocyanate-terminated prepolymer of polytetramethylene glycol in a solvent. It is believed this material is sold commercially as "Aquaseal." This product cures slowly over a 48 hour period, so it is not highly useful for field use or quick repair. Bubbles can also form due to the solvent or to carbon dioxide formed while the material is still soft. After final cure, the material exhibits good adhesion and abrasion resistance.

U.S. 4,578,446 and U.S. 4,714,512 disclose polyurethanes made from isocyanate-terminated prepolymers and sterically hindered liquid aromatic diamines. It is very difficult to formulate repair materials with a convenient 1:1 mix ratio from these materials. These aromatic diamines are not oligomeric and also tend to be very dark in color.

U.S. Patent No. 4,328,322 discloses a polyurea polymer formed from the reaction of essentially equivalent amounts of low molecular weight polyisocyanates and oligomers terminated with p-aminobenzoate. The use of isocyanate prepolymers is not disclosed nor is the use of excess equivalents of isocyanate to amine, which allows for formation of useful bonds despite inaccurate measurements. In the working examples, a 4:1 mix ratio is described, which results in high tensile strength polyureas.

By use of polyisocyanate-terminated prepolymers alone or in combination with a liquid polyisocyanate, combined with oligomeric amines, the resulting cured polymers of the invention exhibit improved flexibility and adhesion to polymeric or rubbery substrates, fulfilling the needs discussed previously.

## Summary of the Invention

A substantially solvent-free two-part polyurethaneurea adhesive is used in this invention as a two part polyurethane urea adhesive for elastomeric substrates. It comprises a two-part composition which is curable to a flexible, elastomeric polyurethaneurea, said composition comprising first and second parts in unreactable combination but being capable of reaction on combination to form said polyurethaneurea, said parts comprising:

(a) a first part comprising a macropolyol or macropolyamine endcapped with aromatic amine; and
(b) a second part comprising polyisocyanate prepolymer alone or in combination with polyisocyanate

wherein the isocyanate content of said polyisocyanate prepolymer and polyisocyanate, if included, is present in an amount between 0.9 to 2.6 equivalents of isocyanate per equivalent of said aromatic amine.

At significantly less than a stoichiometric amount of isocyanate (i.e. less than about 0.9 I/A), the composition may be slower curing and may never become totally tack-free. At a ratio greater than about 2.6, the composition may tend to be more rigid and less elastomeric. Thus, preferably the ratio is from about 1.0 to 2.6 I/A, and more preferably about 1.1 to 2.6 I/A.

The volume mix ratio of the two components is not critical, and a mix ratio of from about 1:1 to 2:1, by volume, based on either component, can be tolerated.

The polyaddition reaction can proceed without a catalyst. However, the reaction may be catalyzed by protonic acids, Lewis acids, organometallic compounds, etc. The latter are commonly used to catalyze hydroxyl/isocyanate reactions.

Upon curing, the composition results in a tough, rubbery polymer, capable of forming a strong bond with a variety of polymeric elastomeric materials, including natural rubber, plasticized polyvinyl chloride, polychloroprene (commonly known as "Neoprene"), chlorosulfonated polyethylene and the like, the bond normally exceeding the strength of the polymeric substrate itself.

When a stoichiometric excess of polyisocyanate is present, the composition will form useful bonds even if the components are inaccurately measured. The polyurethaneurea will cure to form a strong polymeric patch or seal at ambient temperatures. Surprisingly, the adhesive composition will form useful bonds even when exposed to high moisture conditions during cure. Further, the substantially solvent-free adhesive composition cures basically free of bubbles to a tough flexible elastomer. In high humidity environments, some bubbling can occur, but it is insufficient to be detrimental to the bond formed.

The composition is particularly well suited for repairing rubber or rubberized products, such as waders. For example, one can apply the composition to effect a patch, and within a relatively short time re-enter a stream or lake. The adhesive bond can continue to cure even after immersion in water, thus forming a water-tight patch.

## Detailed Description

Useful endcapped products (a) have the following formula:

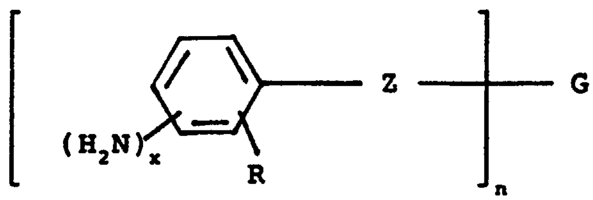

wherein n is an integer of from 2 to 4; each x is one or two; each phenyl nucleus is para-amino, meta-amine, or di-meta-amino-substituted; each Z is selected from

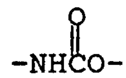 or 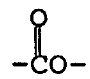

(where the endcapped compound of (a) is derived from a macropolyol) and

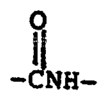

(where the endcapped compound of (a) is derived from a macropolyamine),

each R is hydrogen or lower alkyl, i.e. 4 carbon atoms or less; and G is an n-valent radical which may be obtained by the removal of hydroxyl or amino groups, respectively, from an n-valent polyol or polyamine having a molecular weight of from 250 to 6,000. Below a molecular weight of 250, it will be difficult to achieve the desired flexibility in the cured adhesive. Above 6,000, the endcapped product (a) could be solid and thus harder to dispense, especially in field applications.

The abovementioned endcapped products (a) have terminal groups selected from two classes: aminobenzoic acid esters and amino benzoic acid amides where Z is respectively

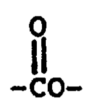 or 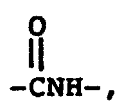,

and aminophenyl urethanes where Z is

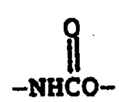

Endcapped products (a) having aminobenzoic acid ester terminal groups can be conveniently provided by reaction of a nitro-substituted benzoyl halide or benzoic acid, with a suitable polyol, such as a polyalkylene ether polyol, polyester polyol, or hydrocarbon polyol, e.g., polybutadiene and castor oil, followed by reduction of the nitro groups of the resulting product to the corresponding amino groups.

Examples of polyalkylene ether glycols include polypropylene glycol, polytetramethylene ether glycol, and poly 1,2 butylene ether glycol. Polyethylene glycol can only be copolymerized up to about 40 weight percent, since the system will tend to become water-sensitive and lose adhesion. Examples of polyester glycols include polybutylene adipate and polyethylene adipate.

Preferably, the endcapped product (a) is a substantially difunctional amino benzoic acid-terminated oligomer with a polytetramethylene ether backbone, having a total molecular weight of 800 to 1300, or mixtures of such polyamines having molecular weights from 800 to 1300.

In like manner, the endcapped products (a) having aminobenzoic acid amide terminal groups useful herein can be obtained by reaction of a nitro-substituted benzoyl halide or benzoic acid with a suitable polyamine, followed by a reduction of the nitro groups of the resulting product to corresponding amino groups.

Preparation of endcapped products (a) useful in the invention is described in detail in U.S. Pat. No. 4,328,322. Examples of suitable endcapped products (a) include "Polamine" 1000 and "Polamine" 650, commercially available from Air Products and Chemicals.

Oligomeric aminophenyl urethanes, i.e., where Z is

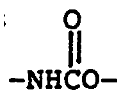

and R is $CH_3$, can be provided by first reacting a polyol, such as polypropylene glycol, with an aromatic diisocyanate to form an isocyanate-terminated prepolymer, followed by reducing the isocyanate group to an amine group to form endcapped product (a). A commercial example of this class is "Desmophen" TPLS 2919, commercially available from Mobay Chemical Company. These endcapped products (a) can be used alone or in combination with each other.

U.S. Patent Nos. 3,808,250; 3,817,940; 3,929,803; 3,975,428; 4,169,206; and 4,174,455 disclose oligomeric ortho anthranilates with various backbones. These patents concentrate on the preparation of these oligomers and no disclosures are made to adhesives or to moisture-curing adhesives with excess isocyanate content. The oligomers which are liquid at room temperature are useful in the amine portion of the adhesives of this invention.

Polyisocyanates useful in the adhesive include a variety of aromatic di- and poly- isocyanate materials conventionally employed in the production of polyurethanes, examples being those derived from methylene dianiline, toluene diamine, naphthalene diamine and other aromatic diamines; aliphatic di- and polyisocyanate materials; and oligomeric prepolymers from methylene diisocyanate, toluene diisocyanate, aliphatic polyisocyanates and polyols containing polypropylene ether backbones, polytetramethylene ether backbones, polybutylene ether backbones, polyester backbones and hydrocarbon backbones, such as castor oil, poly 1,4-butadiene, and dimer and trimer polyols and mixtures thereof. The isocyanate-functional prepolymer (hereafter sometimes referred to as the "prepolymer") contains sufficient isocyanate groups to enable the composition to be cured or polymerized upon exposure to atmospheric or added moisture. Suitable prepolymers are described in U.S. Patent Numbers 3,707,521; 3,779,794; 4,511,626; 3,723,163 and 4,502,479 as well as in "Urethane Polymers," Kirk-Othmer Encyclopedia of Chemical Technology, 3rd Edition, 23, 576-608 (1983) and in the references cited therein. Other suitable prepolymers will be familiar to those skilled in the art of manufacture of moisture-curable urethane compositions.

The prepolymers are made using conventional methods. Typically, they are prepared by reacting an excess of one or more polyisocyanates with one or more polyols to produce a substantially linear prepolymer having residual isocyanate functionality.

Examples of suitable polyisocyanates include the toluene diisocyanates (TDI) such as 2,4-toluene diisocyanate and 2,6- toluene diisocyanate; mixtures of TDI isomers such as a mixture (80/20 or 65/35 by weight) of 2,4-toluene diisocyanate and 2,6-toluene diisocyanate; tetramethylene diisocyanate; hexamethylene diisocyanate; xylene diisocyanate; 1,5-naphthylene diisocyanate; 1,4-phenylene diisocyanate; 4,4'-diphenylmethane diisocyanate (MDI); 4,4'4"-triphenylmethane triisocyanate; and 3,3'-dimethyl-4,4'-diphenylmethane diisocyanate. Aliphatic diisocyanates such as the C-36 aliphatic diisocyanate derived from the dimer of ricinoleic acid can be suitably employed and are commercially available, an example being DDI-1410 (Henkel Corporation). The polyisocyanates herein are known polyisocyanates in the field of polyurethane technology and can be employed singly or in admixture.

Preferred polyisocyanates for employment in the present invention are those in liquid form at ambient temperatures. These materials facilitate the production of easy to use adhesives when combined with normally liquid oligomeric polyamines and obviate the requirement of melting a solid polyisocyanate as a prerequisite to providing a suitable reaction mixture. Suitable liquid polyisocyanates are known and include, for example, polymeric MDI (4,4'- diphenylmethane diisocyanate products obtained as by-products from the synthesis of MDI) and MDI containing a small amount of prepolymer. Examples of useful material are "Isonate" 181, commercially available from Dow Chemical, "Lupronate" M, commercially available from BASF Wyandotte Corporation, and "Rubinate" PBA 2225, commercially available from ICI Chemicals.

Although the polyaddition reaction can proceed without a catalyst, the reaction speed is increased by their use. Examples of suitable catalysts include organometallic compounds, protonic acids, and Lewis acids. Adipic acid, a protonic carboxylic acid, preferentially catalyzes the amine/isocyanate reaction rather than the reaction with water, allowing for formulation of useful bonds even in water or under moist conditions. For adhesive applications in moist or wet conditions, it is preferable that an acid catalyst be used, to avoid the rapid water/isocyanate reaction.

Carboxylic acids catalyze the amine-isocyanate reaction rather than the reaction with water. For example, without catalyst, cure time to a tack free polymer may be three hours. When adipic acid was used as a catalyst, the cure time ranged from 30 to 5 minutes to a tack free state depending on the catalyst concentration.

certain amine and isocyanate formulations may tend to crystallize when stored at temperatures below -18°C (0°F), making dispensing and mixing difficult. If warmed to room temperature before dispensing, some formulations do not fully return to their original liquid state. Surprisingly, this problem can be solved for the amine portion by the addition of small amounts of a lower molecular weight polyamine such as" Polamine" 650 available from Air Products and Chemicals, which has a molecular weight of about 800. For the isocyanate component, crystallizing prepolymers of intermediate molecular weight are not preferred, but can be utilized. Crystallization of some prepolymers can be reduced by adding liquid MDI, heretofore described. Addition of a liquid plasticizer and/or a solvent has also been found to solve the problem of crystallization.

The formulations may also contain fillers, plasticizers, and thixotropic agents such as clay, calcium carbonate, and silica; colorants, UV absorbers and adhesion promoters to produce desired resultant properties. For instance, "Cab-0-Sil" TS-720, available from Cabot Corporation, a high surface area synthetic silica precoated with a silicone oil, helps impart non-sag properties to the adhesive.

In the two-part adhesive, the polyisocyanate prepolymer alone or in combination with polyisocyanate is present in an amount between 0.90 to 2.6 equivalents per equivalent of oligomeric aromatic amine. Within the foregoing range of mole equivalents, there is considerable latitude in formulation. For practical purposes, it has been found that a mix ratio of 1:1 to 2:1, by volume, based on either component, is acceptable, thus permitting easy estimation of amounts.

The pot life, herein defined as the time, after mixing, after which the composition no longer spreads easily onto a substrate, can vary depending on component concentration. Preferably, the pot life is less than 10 minutes.

The invention is further described in the following specific examples, provided by way of illustration, and not to be construed as limiting.

PREPARATION OF MDI PREPOLYMER

This prepolymer was prepared by reacting 13.7 parts of MDI; 19.7 parts NIAX LHT 28 polyol, a 6000 molecular wt. polyol available from Union Carbide Corp; 46.9 parts of "Terathane" 2000, a polytetramethylene ether diol of molecular weight of 2000 available from Du Pont (or from Quaker Oats as "Polymeg" 2000); 9.40 parts HB-40, a plasticizer available from Monsanto Corp.; and 9.9 parts of VMP naphtha, a petroleum distillate available from Union Oil Company. The reaction is carried out in 1 atmosphere of dry nitrogen at 60°C for 3 hours. The Brookfield viscosity should be about 13,000 cps. and the NCO equivalent weight should be from 1800 to 2000 (Prepolymer 1).

Another MDI prepolymer useful in the invention can be prepared by heating "NIAX" LHT 28 and MDI until liquid with stirring, then adding "Terathane" 2000 and HB-40, heating to 60°C for 2 hours, then dumping into metal containers flushed with nitrogen and sealed tightly. This prepolymer contains no solvent.

Example 1

An adhesive composition was prepared as follows: Part A was prepared by mixing "Polamine" P-1000 (92.0 wt. %), an oligomeric diamine available from Air Products and Chemicals; adipic acid catalyst (2.5 wt. %); and "Cab-0-Sil" TS-720, a silica available from Cabot Corporation (5.5 wt. %). Part B was prepared by mixing "Rubinate" PBA-2225, a methylene diisocyanate available from ICI Chemicals, (78.1 wt. %), "Adiprene" L-100 (14.6 wt. %), a prepolymer of polytetramethylene ether polyol and TDI, available from Uniroyal, and "Cab-0-Sil" TS720 (7.3 wt %). Parts A and B were mixed at a ratio of 20 g Part A to 10.6 g Part B, representing an equivalent or mole ratio of 2.0/1 isocyanate to amine (I/A). The adhesive composition had a pot life of 5-10 minutes, rapidly developing useful green strength, and cured over a period of two days to a very tough adherent coating.

The performance of the adhesive of Example 1 was compared with that of various commercially available adhesive compositions: "Goop" - Eclectric Products, Inc; "Barge Cement" - Pierce and Stevens Chemical Corp.; "Aquaseal" - D. V. McMett and Co.; "Duro" (a vinyl adhesive) - Loctite Corp.; "Shoe Goo" II - Eclectric Products Inc.; and "Rubber Cement" (patch) - Vicor Automotive Products Inc.

The adhesive of Example 1 and the commercial products were applied to natural rubber, "Neoprene" and polyvinyl chloride, the three materials most often used for waders and like products. The surfaces were cleaned with abrasive paper ("Wetordry" 180, available from the 3M Company) before the adhesive compositions were applied. The samples were allowed to cure for 24 hours at room temperature. The strength of the adhesive bond was evaluated by manually attempting to remove or separate the adhesive film from the substrate with a spatula. The results are presented in Table 1 below.

TABLE 1

| Sample | Substrate | | |
|---|---|---|---|
| | Natural Rubber | Neoprene | Polyvinyl Chloride |
| Ex 1 | good (1) | good | good |
| Goop (PU)* | fair (2) | poor (3) | fair |
| Barge (Neoprene) | fair | poor | poor |
| Aquaseal (PU)* | fair | poor | poor |
| Duro (PVC)** | poor | very poor (4) | poor |
| Rubber Cement (elastomer) | fair | poor | poor |

* polyurethane

** polyvinyl chloride

(1) good = strong adhesive bond; does not separate from substrate

(2) fair = adhesive film partially separated

(3) poor = adhesive readily separated from substrate

(4) very poor = no adhesive interaction between substrate and adhesive film

Example 2

A two-part adhesive composition was prepared as follows: Part A was prepared by mixing 250 g (94.3%) of "Polamine" 1000, 4 g (1.5%) of adipic acid and 11 g (4.2%) "Cab-0-Sil" TS-720. Part B was prepared by mixing 342 g (78.1%) of "Rubinate" PBA-2225, 64 g (14.6%) of "Adiprene" L1OO, and 32 g (7.3%) of "Cab-0-Sil" TS-720. The two parts were mixed in a 2:1 mix ratio by weight yielding an adhesive composition with a 1.97 I/A equivalency ratio. The pot life was between 5 and 10 minutes.

The composition was applied to the following substrates: chlorosulfonated polyethylene ("Hypalon"), leather, canvas, aluminum, steel, stainless steel and wood. The adhesive composition was allowed to cure at room temperature for 24 hours and tested for adhesive strength by trying to scrape off or separate the adhesive composition from the substrate with a spatula. The material could not be removed from any of these surfaces.

Example 3

An adhesive composition was prepared by mixing Part A and Part B prepared according to Example 2 in a 3.1:1 mix ratio by weight to obtain a 1.27 I/A equivalency ratio. Pot life was five to ten minutes. The mixture was applied to natural rubber and plasticized vinyl chloride substrates and allowed to cure for 24 hours at room temperature. The resultant adhesive film was a tough polymer that adhered well to both substrates.

Example 4

An adhesive composition was prepared by mixing Part A and Part B of Example 2 in a mix ratio of 2.5:1 by weight to provide a 1.58 I/A equivalency ratio. The working pot life was again five to ten minutes. The mixture was applied to natural rubber and plasticized vinyl chloride and allowed to cure for 24 hours. The resultant adhesive film was a tough polymer that adhered well to both substrates.

Example 5

An adhesive composition was prepared by mixing Parts A and B of Example 2 in a mix ratio of 1.5:1 by weight to provide a 2.63 I/A equivalency ratio. The mixture was applied to natural rubber and plasticized polyvinyl chloride and allowed to cure for 24 hours. The resultant adhesive film was a tough polymer that adhered well to both substrates.

Example 6

An adhesive composition was prepared by mixing 120 g "Polamine" 1000, 2 g, "Empol" 1010, dimer acid commercially available from Emery, and 3.5 g "Cab-0-Sil" TS-720 as Part A. Part B was prepared by mixing 48 g of Prepolymer 1 described hereinabove, 48 g of ME-090, (MDI prepolymer) available from Mobay Chemical Corp., and 24 g "Rubinate" PBA-2225. Parts A and B were mixed together in a 1:1 by weight mix ratio, a 1.7 I/A equivalency ratio, yielding an adhesive having a pot life of about 5 minutes. The composition cured to a tough flexible polymer having very good

adhesion to rubber and plasticized polyvinyl chloride.

Example 7

An adhesive composition was prepared by mixing 0.67 g of Part B and 1 g of Part A by weight of Example 6 together to provide a 1.1 I/A equivalency ratio. The mixture had a pot life of 5 minutes and cured over 24 hours at room temperature to a strong flexible film having good adhesion to natural rubber and plasticized polyvinyl chloride. The adhesive could not be scraped from either substrate with a spatula.

Example 8

An adhesive composition was prepared by mixing 1 g Part B and 0.67 g Part A of Example 6 to provide a 2.5 I/A ratio. The mixture had a pot life of 5 minutes. After curing for 24 hours at room temperature, the resulting polymeric material was strong and flexible. Adhesion to natural rubber and plasticized vinyl was very good.

Examples 7 and 8 illustrate the tolerance for a reasonable amount of mixing error provided by the use of a stoichiometric excess of isocyanate in the adhesive formulation.

Example 9

A two-part adhesive composition was prepared and tested as in Example 8 with a 1:1 weight ratio using the following components:

| Part A: | Amine Part | Amount | Percent by Weight |
|---|---|---|---|
| | "Polamine" 1000<br>"Empol" 1010 | 0.95 g<br>0.05 g<br>1.00 g | 95.0<br>5.0<br>100.0 |

| Part B: | Isocyanate Part | Amount | Percent by Weight |
|---|---|---|---|
| | ME090 (MDI Prepolymer) | 1.0 g | 100.0 |

The pot life of the mixed composition was about 5 minutes. The composition became tack-free in about 30 minutes. After overnight (about 16 hours) at room temperature, the composition cured to a tough flexible polymer having good adhesion to plasticized polyvinyl chloride and fair adhesion to natural rubber.

## Claims

1. Use of a two-part composition which is curable to a flexible, elastomeric polyurethaneurea, said composition comprising first and second parts being capable of reaction on combination to form said polyurethaneurea, said parts comprising:

   (a) a first part comprising a macropolyol or macropolyamine endcapped with aromatic amine; and

   (b) a second part comprising polyisocyanate prepolymer alone or in combination with polyisocyanate wherein the prepolymer is prepared by reacting an excess of one or more polyisocyanates with one or more polyols and the isocyanate content of said polyisocyanate prepolymer and polyisocyanate, if included, is present in an amount between about 0.9 to about 2.6 equivalents of isocyanate per equivalent of said aromatic amine as a two-part polyurethane-urea adhesive for elastomeric substrates.

2. The use of claim 1 wherein the endcapped product (a) of the first part has the formula:

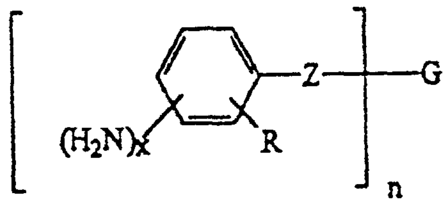

wherein n is an integer of from 2 to 4; each x is an integer one or two; each phenyl nucleus is para-amino, meta-amino, or di-meta-amino- substituted; each Z is selected from

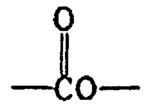 or 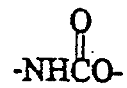

when the endcapped compound of (a) is derived from a macropolyol and

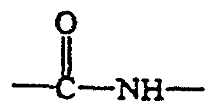

when the endcapped compound of (a) is delved from a macropolyamine.,

R is hydrogen or lower alkyl, and

G is an n-valent radical which is obtained by the removal of hydroxyl groups or amino groups, respectively, from an n-valent polyol or polyamine having a molecular weight of from 250 to 6,000.

**3.** The use of claim 2 wherein said endcapped product (a) has terminal groups selected from the group consisting of aminobenzoic acid esters and aminobenzoic acid amides.

**4.** The use of claim 2 wherein said endcapped product (a) is a difunctional aminobenzoic acid-ester oligomer with a polytetramethyline ether backbone.

**5.** The use of any preceding claim wherein said endcapped product (a) has a molecular weight of from 800 to 1300.

**6.** The use of any preceding claim the composition containing from 1.0 to 2.6 equivalents of isocyanate per equivalent of amine.

**7.** The use of any preceding claim the composition further containing a carboxylic acid catalyst in at least one of said parts.

**8.** The use of claim 7 wherein said carboxylic acid is adipic acid.

**9.** The use of any preceding claim wherein components (a) and (b) are present at a volume ratio of from about 1:1 to 2:1 based on either (a) or (b).

**Patentansprüche**

**1.** Verwendung einer zweiteiligen Zusammensetzung, die zu einem flexiblen, elastomeren Polyurethanharnstoff vernetzbar ist, welche Zusammensetzung erste und zweite Teile aufweist, die bei Vereinigung unter Bildung des Polyurethanharnstoffes zur Reaktion fähig sind, welche Teile aufweisen:

(a) einen ersten Teil mit einem Makropolyol oder Makropolyamin, terminiert mit aromatischem Amin; und
(b) einen zweiten Teil mit Polyisocyanat-Prepolymer allein oder in Kombination mit Polyisocyanat, worin das Prepolymer hergestellt wird durch Umsetzen eines Überschusses von einem oder mehreren Polyisocyanaten mit einem oder mehreren Polyolen und der Isocyanat-Gehalt des Polyisocyanat-Prepolymers und Polyisocyanats, sofern einbezogen, in einer Menge zwischen etwa 0,9 bis etwa 2,6 Äquivalenten Isocyanat pro Äquivalent des aromatischen Amins als ein zweiteiliger Polyurethanharnstoff-Klebstoff für elastomere Substrate vorliegen.

2. Verwendung nach Anspruch 1, bei welcher das terminierte Produkt (a) des ersten Teils die Formel hat:

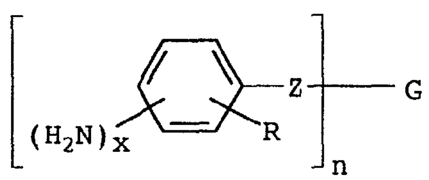

worin n eine ganze Zahl von 2 bis 4 ist; jedes x ist eine ganze Zahl von 1 oder 2; jeder Phenyl-Ring ist para-Amino-, meta-Amino- oder Di-meta-amino-stubstituiert; iedes Z wird ausgewählt aus

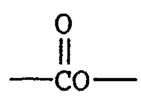

oder

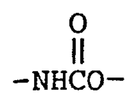

wenn die terminierte Verbindung von (a) deriviert wird von einem Makropolyol, und

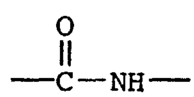

wenn die terminierte Verbindung von (a) deriviert wird von einem Makropolyamin;
R ist Wasserstoff oder niederes Alkyl und
G ein n-wertiges Radikal, das erhalten wird durch Entfernen von Hydroxyl-Gruppen bzw. Amino-Gruppen von einem n-wertigen Polyol oder Polyamin mit einer relativen Molekülmasse von 250 ... 6.000.

3. Verwendung nach Anspruch 2, bei welcher das terminierte Produkt (a) über terminale Gruppen verfügt, ausgewählt aus der Gruppe, bestehend aus Aminobenzoesäureestern und Aminobenzoesäureamiden.

4. Verwendung nach Anspruch 2, bei welcher das terminierte Produkt (a) ein bifunktionelles Aminobenzoesäureester-Oligomer mit einem Polytetramethylinether-Grundgerüst ist.

5. Verwendung nach einem der vorgenannten Ansprüche, bei welcher das terminierte Produkt (a) eine relative Molekülmasse von 800 ... 1.300 hat.

6. Verwendung nach einem der vorgenannten Ansprüche, wobei die Zusammensetzung 1,0 ... 2,6 Äquivalente Isocyanat pro Äquivalent Amin enthält.

7. Verwendung nach einem der vorgenannten Ansprüche, wobei die Zusammensetzung ferner einen carbonsäure-Katalysator in mindestens einem der Teile enthält.

8. Verwendung nach Anspruch 7, bei welcher die Carbonsäure Adipinsäure ist.

9. Verwendung nach einem der vorgenannten Ansprüche, bei welcher die Komponenten (a) und (b) in einem Volumenverhältnis von etwa 1:1 ... 2:1 bezogen entweder auf (a) oder (b) vorliegen.

## Revendications

1. Utilisation d'une composition à deux composants qui est durcissable pour donner une polyuréthane-urée élastomère flexible, ladite composition comprenant un premier composant et un second composant capable de réagir lorsqu'ils sont combinés pour former ladite polyuréthane-urée, lesdits composants comprenant:

   (a) un premier composant comprenant un macropolyol ou une macropolyamine, coiffé par une amine aromatique; et
   (b) un second composant comprenant un prépolymère polyisocyanate seul ou en combinaison avec un polyisocyanate dans lequel le prépolymère est préparé par réaction d'un excès d'un ou de plusieurs polyisocyanates avec un ou plusieurs polyols et la teneur en isocyanate dudit prépolymère de polyisocyanate et dudit polyisocyanate, s'il est incorporé, est une quantité comprise entre 0,9 et environ 2,6 équivalents d'isocyanate par équivalent de ladite amine aromatique, en tant qu'adhésif polyuréthane-urée à deux composants pour substrats élastomères.

2. Utilisation selon la revendication 1, dans laquelle le produit coiffé (a) du premier composant répond à la formule:

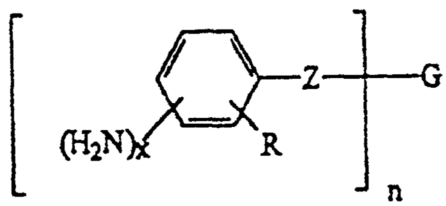

dans laquelle n est un nombre entier de 2 à 4; chaque x est un nombre entier valent un ou deux; chaque noyau phényle est substitué par un groupe amino en para, un groupe amino en méta ou deux groupes amino en méta; chaque Z est choisi parmi

$$-\overset{\mathrm{O}}{\overset{\|}{\mathrm{C}}}\mathrm{O}- \quad \text{ou} \quad -\mathrm{NH}\overset{\mathrm{O}}{\overset{\|}{\mathrm{C}}}\mathrm{O}-$$

lorsque le composé coiffé (a) est dérivé d'un macropolyol et

$$-\overset{\mathrm{O}}{\overset{\|}{\mathrm{C}}}-\mathrm{NH}-$$

lorsque le composé coiffé (a) est dérivé d'une macropolyamine,

   R est un atome d'hydrogène ou un groupe alkyle inférieur, et
   G est un radical de valence n, que l'on obtient par élimination de groupes hydroxyle ou de groupes amino, respectivement, d'un polyol ou d'une polyamine de valence n ayant une masse moléculaire de 250 à 6 000.

3. Utilisation selon la revendication 2, dans laquelle ledit produit (a) coiffé possède des groupes terminaux choisis dans le groupe constitué par les esters d'acide aminobenzoïque et les amides d'acide aminobenzoïque.

4. Utilisation selon la revendication 2, dans laquelle ledit produit (a) coiffé est un oligomère d'ester d'acide aminobenzoïque difonctionnel avec un squelette poly(éther de tétraméthylène).

5. Utilisation selon l'une quelconque des revendications précédentes, dans laquelle ledit produit coiffé (a) possède une masse moléculaire de 800 à 1 300.

6. Utilisation selon l'une quelconque des revendications précédentes, dans laquelle la composition contient de 1,0

à 2,6 équivalents d'isocyanate par équivalent d'amine.

**7.** Utilisation selon l'une quelconque des revendications précédentes, dans laquelle la composition contient en outre un catalyseur acide carboxylique dans au moins un desdits composants.

**8.** Utilisation selon la revendication 7, dans laquelle ledit acide carboxylique est l'acide adipique.

**9.** Utilisation selon l'une quelconque des revendications précédentes, dans laquelle les composants (a) et (b) sont présents dans un rapport volumique d'environ 1:1 à 2:1, basé sur (a) ou sur (b).